# EUROPEAN PATENT APPLICATION

(11) **EP 4 371 384 A1**
(43) Date of publication of application: **22.05.2024**
(21) Application number: 23175175.1
(22) Date of filing: 24.05.2023
(51) Int. Cl.: A01C 7/20, A01C 21/00

(54) **CONTROL MODEL OF PRECISION DIRECT SEEDING TECHNOLOGY FOR WINTER WHEAT**

(30) Priority: 21.11.2022 LT 2022027
(71) Applicant: Vytautas Magnus University Agriculture Academy, 53361 Akademija, Kauno r. (LT)
(72) Inventor: Sarauskis, Egidijus, 47127 Kaunas (LT); Kazlauskas, Marius, 53330 Ringaudai, Kauno r. (LT); Steponavicius, Dainius, 49333 Kaunas (LT); Romaneckas, Kestutis, 53330 Ringaudai, Kauno r. (LT); Bruciene, Indre, 53458 Virbaliskiai, Ringaudu sen., Kauno r. (LT); Buragiene, Sidona, 46495 Kaunas (LT); Naujokiene, Vilma, 53353 Akademijos mst., Kauno r. (LT)
(74) Representative: Petniunaite, Jurga

(57) **Abstract**

The disclosure belongs to the field of agriculture and can be used to solve the problems of technological, energy, environmental, and economic efficiency of precise direct seeding of winter wheat. According to the precise direct seeding management model, winter wheat seeding is carried out according to the previous year's biological fertility by dividing the subarctic rye soil into zones, applying algorithms, and forming digital maps of variable seeding norm and depth, according to direct seeding machine using telematic automatic control tools, 16.66 cm in row spacing at speed of 10 km h⁻¹ winter wheat seeds are sown with the variable seeding norm of 3.26-4.78 million seeds ha⁻¹ and 23-48 mm insertion depth. Seeding management increases the productivity of plant germination, height, and biomass of the above-ground part of plants, and the uniformity of the grains in the ear in different field zones improves the quality of seedbed, plant development.

## Description

### FIELD OF INVENTION

The invention belongs to the field of agriculture and solves the possibilities of technological, energetic, ecological, and economic efficiency of precise direct seeding of winter wheat.

### BACKGROUND ART

A new method for precision no-till seeding of winter wheat with the variable seeding norm and variable seeding depth that takes into account the qualitative and economic effects of seeding differs from another precision seed norm compensation method in which the frequency of seeder rotation is controlled by adaptively changing the spacing between grains to be seeded in their bed, i.e., the amount of seed sown per unit area [CN111083968A].

A similar method for determining the seeding norm in real time is known for a combined seeding and fertilizing device that uses a dynamic weighing method and a signal processing method, where the weighing sensor detects the mass of the seed, increasing the accuracy of the variable seeding norm [CN107091663A], but which does not provide control of the variable seeding depth.

A wheat seeding and fertilizing device with variable fertilizer norm and depth are developed, in which double auger fertilizer spreaders are arranged in a checkerboard manner in two rows so that different fertilizer norms can be distributed to the soil at different depths and a variable fertilizer norm can be achieved according to the actual fertilizer requirement of wheat. in the cultivation method [CN108901260A A], is different from our precise control model of the technological process of no-till winter wheat, because it is only suitable for changing the amount and depth of fertilizer.

For a similar purpose, there is a patented computer method for determining the sowing norm, sowing depth, and sowing time of at least one crop based on the data obtained by the computing device from the database and from the user inputs in real-time (fertility, weather, soil, field technical operation data) [WO2022136182A1], but the computer model created does not provide a practical rationale for changing the soil, plant, environmental, economic, etc. Conditions during precision direct seeding of winter wheat.

In the Huang-Huai-Hai region, a precision wheat seeding method has been developed [CN112219653], which aims to maximize the use of light, heat, water, and fertilizer resources by accunormly optimizing the spacing between sown grains (plants) and the spacing between plant rows, but the applicability of the optimal parameters in such regions as northern Europe is close to zero when applying the precision direct seeding technique for winter wheat.

The real-time control model of sustainable precision direct seeding of winter wheat with variable seeding norm and depth is closest to the patented seeder with automatic control of seeding depth and norm [US10080323B2], but different from the technological process control model of precision direct seeding of winter wheat, whose operation is based on telemetry systems and UV-VIS-NIR spectrometry, which records a complex of multifunctional parameters, creates maps of variable seeding, and evaluates the energetic, ecological, technological, and economic effects in real conditions.

### SUMMARY OF INVENTION

The quality of technological operations of precision sowing determines the distribution of seed in the seedbed of the soil and ensures optimal sowing area, depth, germination, development, yield, and quality. To reduce wheat seed costs, adapt to the variability of different soil properties of heterogeneous fields, and ensure crop profitability, the application of a control model for precise no-till seeding of winter wheat at variable norms and depth is important. The new method increases the sustainability of the farm, optimizes the amount of planted winter wheat seeds, and their distribution in the bed, improves seed germination, increases productivity and grain quality, the flexibility of precise no-till, technological process management, energetic, environmental, technological and economic efficiency.

According to the results of physical, mechanical, and agrochemical properties of soil research using multifunctional UV-VIS-NIR (ultraviolet (UV) optical visible light (VIS) and near-infrared radiation (NIR) spectroscopy sensors, recording absorbed and reflected light waves (wavelength range UV 300-400 nm, VIS 400-765 nm, NIR 765-2500 nm)) are used spectroscopic methods, to create algorithms that generate variable norm and variable depth seeding maps, select seeders, and perform accurate direct variable-norm and variable depth seeding of winter wheat according to different soil properties, which are divided into field zones in real-time in the field using telematic automatic control systems and optical scanning equipment.

A smart winter-wheat sowing online model is disclosed by its broadest definition, for a specific seeding depth and seeding norm control in real-time, according to the following created sequence of the significance of soil parameters:
- the apparent soil electrical conductivity (ECa) is evaluated first,
- the soil moisture content (MC) is evaluated second,
- the soil organic matter (OM) is evaluated third, and
- the soil penetration resistance (PR) (up to 5 cm depth) is evaluated fourth.

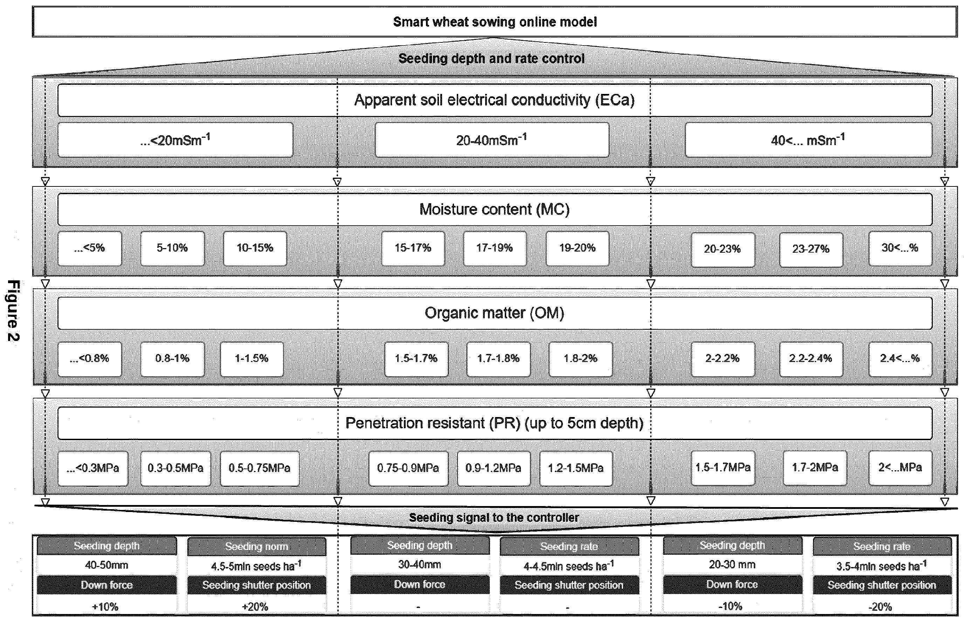

According to the values of the above most significant 4 soil parameters, the appropriate seeding signal is formed and supplied to the seeding controller, to adjust the seeding depth and norm. According to the present wheat-sowing online model (Figure 2):
- if the apparent soil electrical conductivity (ECa) is less than 20 mSm⁻¹, soil moisture content (MC) is up to 15%, soil organic matter (OM) is up to 1.5%, soil penetration resistant (PR) (up to 5 cm depth)is up to 0.75 Mpa - this provides the basis to define the seeding depth 40-50 mm (which is achieved by increasing downforce by 10%), and the seeding norm of 4.5-5 million seeds ha⁻¹ (achieved by increasing the seeding shutter position by 20%);
- if the apparent soil electrical conductivity (ECa) is 20-40 mSm⁻¹, the soil moisture content (MC) 15-20%, the soil organic matter (OM) 1.5-2%, and the soil penetration resistant (PR) (up to 5 cm depth) 0.75-1.5 Mpa - this provides the basis to define the seeding depth 30-40 mm (downforce is not changed), and the seeding norm 4-4.5 million seeds ha⁻¹ (the seeding shutter is not changed);
- if the apparent soil electrical conductivity (ECa) is more than 40 mSm⁻¹, soil moisture content (MC) is more than 20%, soil organic matter (OM) is more than 2%, soil penetration resistant (PR) (up to 5 cm depth) is more than 1.5 Mpa - this provides the basis to define the seeding depth 20-30 mm (which is achieved by reducing downforce by 10%), and the seeding norm 3.5-4 million seeds ha⁻¹ (achieved by reducing the seeding shutter position by 20%).

The system of variable norm and depth-seeding comprises a GPS (Global Positioning System) and RTK (Real-Time Kinematic) receiver, a cockpit screen with the ability to load and run application maps, collect data and provide real-time seeding information to the operator. Common spatial field data layers include soil texture maps, field relief data, and yield maps of crops grown the previous year. Accunorm measurements of soil properties are taken in real-time, whereupon the system uses software and algorithms to send a signal to the hydraulic (or electric) drive of the seeder to change the seeding norm and depth of the seeder accordingly in real-time.

The task of the invention is to increase the quality, technological, energetic, environmental, and economic efficiency of the technological process of precise direct seeding of winter wheat based on telemetry systems and multifunctional UV-VIS-NIR spectrometry methods and to improve seed distribution, germination, development, productivity, and quality.

In this technology of precise direct seeding of winter wheat, the sensors with optical modules installed in the seeder detect the parameters of soil properties, based on which the seeding maps are prepared and the seeding norm is adjusted in real-time by the metering unit and depending on the rotation speed of the shaft of the seeder, as well as the seeding depth by the hydraulic unit attached to the seeder.

Coulters are installed along the frame of the seeder, and suitable measuring devices for soil properties are installed. The seed pipes are configured to carry the singled seed to the appropriate coulter, from where it enters the appropriate seedbed. Interception of seed exiting the seed tubes maintains uniform seed spacing in the bed.

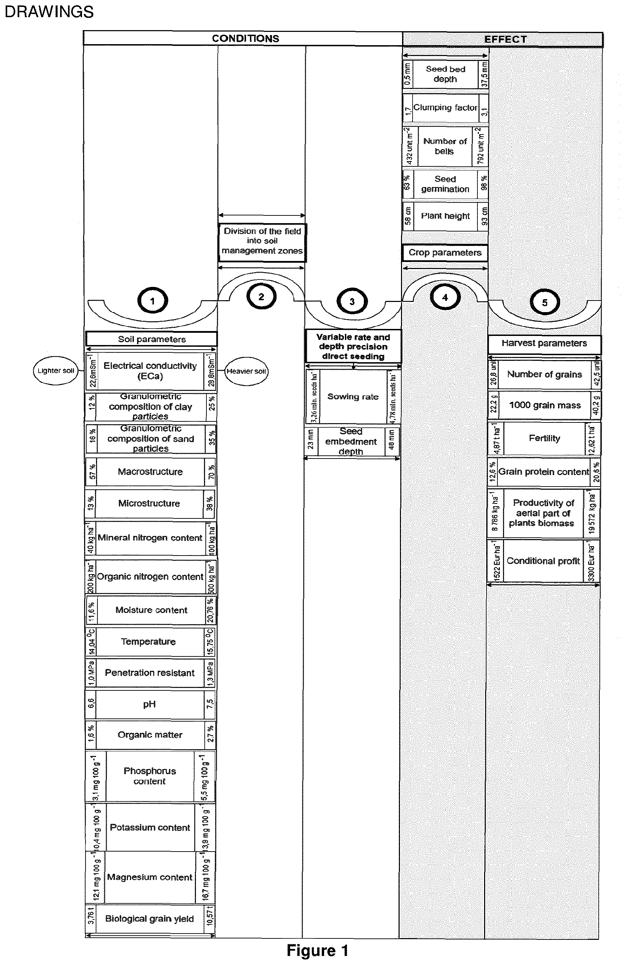

The sustainable management model of precision direct seeding technology for winter wheat shown in Figure 1 is based on the mutually dependent interactions of soil properties that respond to the variable norm and variable depth seeding efficiency in improving seedbed quality indicators, seed germination, better crop development, yield, winter wheat productivity, and quality parameters.

### DESCRIPTION OF DRAWINGS

The invention is explained in the drawings and diagrams. The drawings are provided as a reference to possible embodiments and experimental results.
- **Figure 1**: depicts the winter wheat sowing online model according to the present invention.
- **Figure 2**: depicts the workflow, where according to the determined values of the significant 4 soil parameters (ECa, MC, OM, PR), and the precision seeding model data, the appropriate seeding signal is formed and supplied to the seeding controller, to adjust the required seeding depth and rate.

### DETAILED DESCRIPTION OF INVENTION

According to the conducted scientific experimental research, the invention could be realized according to the limits of the properties of subarctic (boreal) rye-soil, when the pH is 6.6-7.5, the amount of phosphorus in the soil - 3.1-5.5 mg 100 g⁻¹, potassium - 10.4-13.9 mg 100 g⁻¹, magnesium - 12.1-16.7 mg 100 g⁻¹, organic matter - 1.6-2.7%, clay particles - 12-25%, sand particles - 16-35%, apparent electrical conductivity - 22,6-28,8 mS m⁻¹, hardness of the upper soil layer (up to 5 cm depth) - 1,0-1,3 MPa, humidity - 11,6-20,8 %, temperature 14.0-15.8 °C, macrostructure - 57-70%, microstructure - 13-38%, the biological yield of ground wheat grains - 3.76-10.57 t ha⁻¹, mineral nitrogen content - 40-100 kg ha⁻¹, organic nitrogen content - 200-500 kg ha⁻¹, according to which the soil is divided into zones and sowing maps are drawn up. The variable seeding maps are transferred in digital format to the computer on the tractor and by applying the algorithms, winter wheat seeds are sown at a variable seeding norm of 3.5-5 million with a special direct seeding seeder, of seeds ha⁻¹ and with a variable insertion depth of 20-50 mm, using telematic automatic controls, sowing at 16.66 cm row spacing at a speed of 10 km h⁻¹.

A more broad range of certain parameters from the above parameter set defines organic matter - 0.6-2.7% (instead of the narrower experimental range of 1.6-2.7%), apparent electrical conductivity -15-50 mS m⁻¹ (instead of the narrower experimental range 22,6-28,8 mS m⁻¹), hardness of the upper soil layer (up to 5 cm depth) - 0.2-2.5 MPa (instead of the narrower experimental range 1,0-1,3 MPa), humidity - 3-35% (instead the narrower experimental range of 11,6-20,8 %).

With this winter wheat precision direct seeding technology, after sowing, the depth of the seed placement bed is 5.0-37.5 mm (in heavier (5-15 mm) and lighter (30.5-37.5 mm) soil), seed germination 63 -98%, wheat bushiness coefficient 1.7-3.1, number of winter wheat ears 432-792 pcs. m⁻², plant height 58-93 cm.

The weight of 1000 grains of the grown winter wheat crop is 22.2-40.2 g, yield - 4.87-12.62 t ha⁻¹, grain protein content - 12.6-20.6%, biomass productivity of the entire aerial part of plants - 8786 -19572 kg ha⁻¹, the number of grains in an ear - 26.8-42.5 pcs. and conditional profit - 1522-3300 EUR ha⁻¹ (presented Figure 1).

## Claims

1. A sowing management model of precise direct winter-wheat sowing technology, w her e i n the sowing of the winter-wheat is carried out, according to a data sequence of subarctic (boreal) rye-soil properties determined in real-time, wherein
- first, the apparent soil electrical conductivity (ECa) is determined,
- second, the soil moisture content (MC) is determined,
- third, the soil organic matter (OM) is determined, and
- fourth, the soil penetration resistance (PR) up to 5 cm depth is determined, wherein the sequence of the determined rye-soil parameter values forming a wheat-sowing online model, according to which,
- a specific seeding depth and norm control are defined in real-time, and further
- a seeding signal is formed and supplied to a seeding controller to adjust the required seeding depth and rate.

2. The model according to claim 1, **wherein** the values of the soil parameters are
- the apparent soil electrical conductivity (ECa) is less than 20 mSm⁻¹,
- soil moisture content (MC) up to 15%,
- soil organic matter (OM) up to 1.5%,
- soil penetration resistant (PR) (up to 5 cm depth) up to 0.75 Mpa,
thereby, the seeding depth is defined in the range of 40-50 mm, achieved by increasing down-force by 10%, and
the seeding norm is defined in the range of 4.5-5 million seeds ha⁻¹, achieved by increasing the seeding shutter position by 20%.

3. The model according to claim 1, **wherein** the values of the soil parameters are
- the apparent soil electrical conductivity (ECa) is 20-40 mSm⁻¹,
- soil moisture content (MC) is 15-20%,
- soil organic matter (OM) is 1.5-2%,
- soil penetration resistant (PR) (up to 5 cm depth) up to 0.75 Mpa,
thereby, the seeding depth is defined in the range of 30-40 mm with the downforce not changed, and
the seeding norm is defined in the range of norm 4-4.5 million seeds ha⁻¹, achieved with the seeding shutter not changed.

4. The model according to claim 1, **wherein** the values of the soil parameters are
- the apparent soil electrical conductivity (ECa) is more than 40 mSm⁻¹,
- soil moisture content (MC) is more than 20%,
- soil organic matter (OM) is more than 2%,
- soil penetration resistant (PR) (up to 5 cm depth) is more than 1.5 Mpa, thereby, the seeding depth is defined in the range of 20-30 mm, achieved by reducing downforce by 10%, and
the seeding norm is defined in the range of norm 3.5-4 million seeds ha⁻¹, achieved by reducing the seeding shutter position by 20%.

5. The management model of precise direct winter-wheat sowing technology according to claim 1, **wherein** the sowing of the winter wheat is carried out according to
- the real-time determined subarctic boreal rye-soil properties, such as pH, phosphorus, potassium, magnesium, nitrogen, organic matter amounts, granulometric composition, electrical conductivity, hardness, humidity, temperature, macrostructure, microstructure,
- estimated the last year's biological productivity by dividing the subarctic rye soil into zones,
- then applying algorithms to form digital maps of a variable seeding norm and depth, according to which,
- with a special direct-seeding seeder, the winter wheat seeds are sown using telematic automatic control tools
• preferably, by 16.66 cm spacing, as defined by the direct-seeding seeder;
• preferably, at a speed of 10 km h⁻¹, as defined by the direct-seeding seeder;
• at a variable seeding norm of 3.26-4.78 million seeds ha⁻¹, and
• at an insertion depth of 23-48 mm.
